Europäisches Patentamt

European Patent Office

Office européen des brevets

(11) Veröffentlichungsnummer: **0 113 068**
**B1**

(12) **EUROPÄISCHE PATENTSCHRIFT**

(45) Veröffentlichungstag der Patentschrift: **25.05.88**

(51) Int. Cl.⁴: **B 65 G 47/14,** B 23 Q 7/00

(21) Anmeldenummer: **83112153.8**

(22) Anmeldetag: **02.12.83**

(54) **Verfahren und Vorrichtung zum Orientieren von im wesentlichen prismatischen Körpern.**

(30) Priorität: **02.12.82 DE 3244627**

(43) Veröffentlichungstag der Anmeldung:
**11.07.84 Patentblatt 84/28**

(45) Bekanntmachung des Hinweises auf die
Patenterteilung:
**25.05.88 Patentblatt 88/21**

(84) Benannte Vertragsstaaten:
**AT CH FR GB IT LI NL SE**

(56) Entgegenhaltungen:
CH-A- 536 244
DE-A-1 481 028
DE-A-2 851 811
US-A-3 114 448
US-A-3 262 543

(73) Patentinhaber: **Kähny Maschinenbau GmbH**
**Oberbrüdenerstrasse 60**
**D-7150 Backnang-Steinbach (DE)**

(72) Erfinder: **Kähny, Peter**
**Forststrasse 8**
**D-7151 Auenwald 2 (DE)**

(74) Vertreter: **Strasser, Wolfgang, Dipl.-Phys et al**
**Patentanwälte Strohschänk, Uri & Strasser**
**Innere Wiener Strasse 8**
**D-8000 München 80 (DE)**

Courier Press, Leamington Spa, England.

## Beschreibung

Die Erfindung betrifft ein Verfahren zum Orientieren von im wesentlichen prismatischen Körpern, insbesondere von Kreissägeblatt-Hartmetallzähnen, die eine sich in Längsrichtung erstreckende, breite, im gewÜnschten ausgerichteten Zustand unten liegende Bodenfläche, eine hierzu parallele, schmalere Deckenfläche, zwei die Deckenfläche mit der Bodenfläche verbindende Seitenflächen sowie zwei von vorn oben nach hinten unten geneigte Stirnflächen aufweisen, von denen die vordere mit einer Rundung in die Deckenfläche übergeht, während die hintere mit der Bodenfläche eine scharfe Kante bildet, sowie einen Vibrationsförderer gemäß dem Oberbegriff von Anspruch 2.

Es sind Vorrichtungen, beispielsweise Anordnungen zum Anlöten von Hartmetallzähnen an Kreissägeblätter bekannt, bei denen im wesentlichen prismatische, d.h. langgestreckte Körper, die bezüglich ihrer Längsachse keinen rotationssymmetrischen sondern einen viereckigen, gleichförmigen, sich allenfalls zu den Enden hin verjüngenden Querschnitt aufweisen, in eine bestimmte Orientierung gebracht werden müssen, um dann automatisch einer weiteren Verarbeitung zugeführt werden zu können.

Bisher konnte diese Orientierung, bei der aus acht möglichen Lagen bezüglich der Längsachse der Körper nur eine einzige günstige Endlage ausgewählt werden muß, nur in der Weise vorgenommen werden, daß die zunächst regellos liegenden prismatischen Körper von Hand in ein Magazin oder dergleichen eingeschoben wurden, das an die Vorrichtung zur weiteren Verarbeitung so angesetzt wurde, daß aus ihm die Körper ohne Änderung ihrer Orientierung beispielsweise durch einen Greifer entnommen werden konnten. Es ist klar, daß das von Hand vorgenommene Orientieren und Einsetzen der Hartmetallzähne in Magazine oder Kassetten einen hohen und kostspieligen Zeit- und Arbeitsaufwand erfordert. Ein automatisches, d.h. mit Hilfe einer entsprechend ausgebildeten Vorrichtung arbeitendes Verfahren, das es erlaubt, Körper der eingangs genannten Art in der beschriebenen Weise zu orientieren ohne dabei die sensitiven und geistigen Fähigkeiten einer Bedienungsperson in Anspruch zu nehmen, ist nicht bekannt.

Zwar ist der DE-A-1 481 028, der DE-A-2 851 811, der US-A-3 114 448, der CH-A-536 244 und der US-A-3 262 543 jeweils ein Vibrationsförderer gemäß dem Oberbegriff von Anspruch 2 entnehmbar, doch ist keine dieser Vorrichtungen in der Lage, im wesentlichen prismatische Körper der eingangs definierten Art so zu orientieren, daß alle Körper, die zum Austrittsende des Vibrationsförderers gelangen, eine einzige von acht verschiedenen möglichen Lagen bezüglich ihrer Längsachse einnehmen.

So zeigt die US-A-3 114 448 eine Vorrichtung zum Orientieren von rein zylindrischen Körpern, die bezüglich ihrer Längsachse nur eine einzige Lage einnehmen können, da die beiden Enden der Körper gleich sind.

Die DE-A-1 481 028 und die US-A-3 262 543 zeigen jeweils eine Vorrichtung zum Orientieren von zylindrischen Körpern mit zwei voneinander verschiedenen Enden, die somit bezüglich ihrer Längsachse auch zwei unterschiedliche Lagen, nämlich "Kopf vorne" oder "Kopf hinten" einnehmen können. Die gleichförmige Orientierung dieser Körper erfolgt nach der DE-A-1 481 028 in der Weise, daß alle "falsch" liegenden Körper mit Hilfe ihres vorspringenden Kopfes um eine zur Längsachse senkrechte Achse um 180° gedreht werden. Eine solche Vorrichtung ist für die Orientierung von im wesentlichen prismatischen, keine kopfartigen Verbreiterungen aufweisenden Körpern, die überdies acht unterschiedliche Lagen einnehmen können, nicht anwendbar.

Bei der US-A-3 262 543 werden alle Körper, die mit dem "falschen" Ende voraus auf der schraubenförmigen Bahn hochwandern, mit Hilfe einer Einrichtung abgeworfen, die selektiv nur auf die spezielle Formgebung des "falschen" Endes anspricht und alle Körper, die mit dem "richtigen" Ende voraus ankommen, ungehindert passieren läßt. Die Auswahl einer aus acht verschiedenen Lagen ist hiermit ebenfalls nicht möglich.

In der CH-A-536 244 ist ein Vibrationsförderer für scheibenförmige Körper insbesondere mit ein- oder doppelseitigen Naben beschrieben, deren Symmetrieachse beim Hochwandern auf der schraubenförmig ansteigenden Bahn quer zur Bewegungsrichtung steht. Unterschiedliche Lagen bezüglich ihrer Achse können diese Körper nicht einnehmen; demgemäß beschreibt diese Druckschrift keine Maßnahmen, wie aus einer Vielzahl von derartigen verschiedenen Orientierungen eine einzige "günstige" automatisch selektiert werden kann.

Schließlich ist in der DE-A-2 851 811 ein Vibrationsförderer dargestellt, durch den prismatische Körper orientiert werden können, die senkrecht zu ihrer Längsachse jeweils einen rechteckigen Querschnitt aufweisen und bei denen die beiden Enden gleich sind. Solche Körper können bezüglich ihrer Längsachse nur zwei verschiedene Lagen einnehmen, von denen die eine durch ein einmaliges Kippen der "falsch" liegenden Körper um 90° um die Längsachse auf einfache Weise in die andere übergeführt wird. Eine weitergehende Möglichkeit der Orientierung von komplizierter aufgebauten, im wesentliche prismatischen Körpern wird nicht beschrieben.

Demgegenüber liegt der Erfindung die Aufgabe zugrunde, ein Verfahren sowie eine Weiterbildung eines Vibrationsförderers der im Oberbegriff des Anspruches 2 beschriebenen Art anzugeben, mit dessen Hilfe im wesentlichen prismatische Körper der eingangs genannten Art automatisch aus einer Vielzahl von beliebig regellosen Lagen in eine einzige vorgebbare Endlage gebracht werden können.

Zur Lösung dieser Aufgabe sieht die Erfindung die im Anspruch 1 (Verfahren) bzw. im Anspruch 2 (Vorrichtung) zusammengefaßten Merkmale vor.

Durch die erfindungsgemäßen Maßnahmen laut Anspruch 1 bzw. Anspruch 2 werden also zunächst einmal zwei der vier möglichen Seitenlagen, d.h. also der Lagen ausgeschieden, bei denen sich eine der Seitenflächen des betreffenden Körpers unten befindet und der Oberfläche der schraubenförmig ansteigenden Bahn zugekehrt ist. Im Anschluß hieran werden die beiden möglichen Deckenlagen und die beiden möglichen Bodenlagen, von denen ja eine eigentlich bereits der gewünschten Endorientierung entspricht, durch eine Drehung der Körper um ihre Längsachse jeweils in die entsprechende Seitenlage übergeführt, wobei nicht nur günstige, sondern auch solche Seitenlagen entstehen, die zu einem Abwerfen der betreffenden Körper von der Bewegungsbahn führen. Obwohl gerade die der angestrebten Endlage entsprechende Bodenlage nach dieser Drehung zu einer nicht stabilen Seitenlage und somit zum Abwerfen der betreffenden Körper führt, ist das erfindungsgemäße Orientierungsverfahren insgesamt erfolgreich und liefert "richtig" orientierte Körper mit einer so großen zeitlichen Dichte, daß auch eine sehr rasch arbeitende Weiterverarbeitungsvorrichtung ohne Wartezeiten bedient werden kann. Dies liegt daran, daß die der gewünschten Endlage entsprechende Orientierung beim Einschwenken der auf dem Boden des Kessels regellos liegenden Körper auf die schraubenförmig ansteigende Bahn um nichts wahrscheinlicher ist, als irgendeine der anderen Lagen, so daß auf Körper, die diese Lage zufälligerweise von Anfang an besitzen, ebensogut verzichtet werden kann, wie auf Körper mit einer der anderen sieben möglichen Orientierungen.

Nach dem oben erwähnten Drehen um die Längsachse und dem Abwerfen der danach ungünstig liegenden Körper bleiben nur noch zwei mögliche Lagen übrig, die sich dadurch sehr deutlich voneinander unterscheiden, daß in der einen Orientierung die betreffenden Körper sich mit einer scharfen Kante voraus bewegen, wobei diese Kante an der Innenwand des Kessels anliegt, während bei der anderen Orientierung die abgerundete Kante vorausläuft und überdies von der Innenwand des Kessels beabstandet ist. Dies ermöglicht es, beispielsweise einen von der Innenwand des Kessels nach innen vorstehenden Vorsprung so auszubilden, daß durch ihn die mit der scharfen Kante voraus wandernden Körper von der Bahn abgeworfen werden, während ihn die mit der Rundung voraus wandernden Körper ungehindert passieren können. Hinter dieser Selektionseinrichtung befinden sich auf der schraubenförmig ansteigenden Bahn also nur noch Körper mit einer einzigen definierten Seitenlage, die durch eine einfache Drehung um die Längsachse der Körper in die gewünschte Bodenlage übergeführt werden kann. Dieser letzten Drehung werden alle den entsprechenden Bereich der schraubenförmig ansteigenden Bahn erreichende Körper unterworfen, so daß am Ende der schraubenförmigen Bahn nur solche Körper austreten, die die gewünschte Endorientierung besitzen.

Zwar sind den oben genannten Druckschriften zum Stand der Technik einzelne der Verfahrensschritte des Anspruches 1 bzw. einzelne der Einrichtungen, wie sie im kennzeichnenden Teil des Anspruches 2 zusammengefaßt sind, entnehmbar:So zeigt z.B. die CH-A-536 244 einen Vibrationsförderer, bei dem die radiale Tiefe der schraubenförmig ansteigenden Bahn kleiner als die Höhe der Körper ist und bei dem die Oberfläche dieser Bahn in radialer Richtung von der freien Innenkante zur Innenwand des Kessels hin etwas abfällt; der DE-A-2 851 811 ist ein Vibrationsförderer entnehmbar, der eine Einrichtung zum selektiven Kippen um die Längsachse der auf der Bodenfläche oder auf der Deckenfläche liegenden Körper auf eine Seitenfläche umfaßt, die von einer sich in Bewegungsrichtung der Körper erstreckenden und über die Oberfläche der Bahn hinaus ansteigenden Rampenfläche gebildet ist, die radial innerhalb der Bahn angeordnet ist und deren radiale Außenkante von der Innenwand des Kessels einen Abstand aufweist, der größer als die Höhe der Körper aber kleiner als die Breite der Bodenfläche der Körper ist; und schließlich ist in der US-A-3 262 543 ein Vibrationsförderer mit einer Einrichtung zum selektiven Abwerfen von sich mit einer scharfen Kante voraus bewegenden Körpern dargestellt, die von einem im Bereich der Bahn von der Innenwand des Kessels nach innen vorstehenden Vorsprung gebildet ist, dessen radiale Abmessung kleiner als die halbe Höhe der Körper ist. Keine dieser Druckschriften weist jedoch darauf hin, daß die in den Ansprüchen 1 und 2 niedergelegten Kombinationen von Verfahrensschritten bzw. von Vorrichtungsmerkmalen in der jeweils beanspruchten Reihenfolge zur Lösung der der Erfindung zugrundeliegenden Aufgabe geeignet sein könnte.

Vorteilhafte Ausgestaltungen des Vibrationsförderers gemäß Anspruch 2 sind in den Unteransprüchen 3 bis 8 niedergelegt.

Die Erfindung wird im folgenden anhand eines Ausführungsbeispiels unter Bezugnahme auf die Zeichnung beschrieben; in dieser zeigt;

Fig. 1 eine perspektivische Darstellung eines Kreissägeblatt-Hartmetallzahns, der ebenso wie eine Vielzahl weiterer solcher Zähne mit Hilfe des erfindungsgemäßen Verfahrens aus einer willkürlichen Lage in eine bestimmte Orientierung gebracht werden soll,

Fig. 2 Auf-, Seiten- und Grundriß des Hartmetallzahns aus Fig. 1,

Fig. 3 im verkleinerten Maßstab drei Hartmetallzähne, die sich in der gewünschten Orientierung befinden,

Fig. 4 eine schematische Darstellung einer ein erstes erfindungsgemäßes Merkmal aufweisenden Orientierungsvorrichtung,

Fig. 5 eine vergrößerte Teilansicht einer Vorrichtung gemäß Fig. 4 mit einer Einrichtung zum selektiven Kippen um die Längsachse von auf der Bodenfläche oder auf der Deckenfläche liegenden Hartmetallzähnen,

Fig. 6 einen Schnitt längs der Linie VI-VI aus Fig. 5,

Fig. 7 und 8 eine Einrichtung zum selektiven Abwerfen von nicht richtig liegenden Hartmetallzähnen,

Fig. 9 eine der Fig. 5 entsprechende Ansicht einer Einrichtung zum Kippen sämtlicher Hartmetallzähne um ihre Längsachse und

Fig. 10 einen der Fig. 6 entsprechenden Schnitt längs der Linie X-X in Fig. 9.

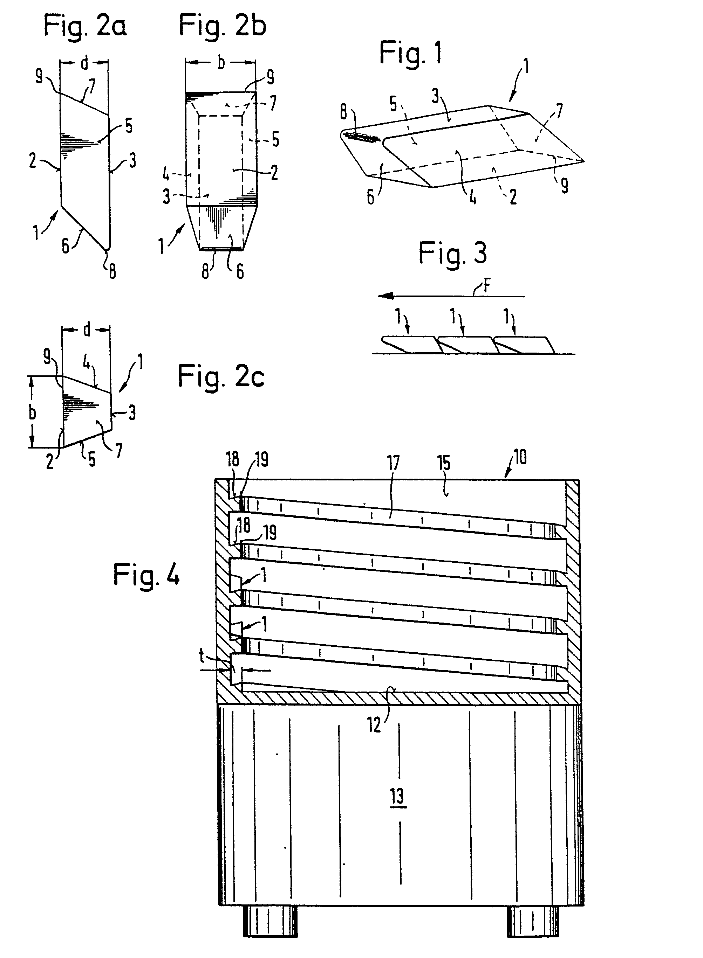

Wie man den Fig. 1 und 2 entnimmt, sind die mit der erfindungsgemäßen Vorrichtung vorzugsweise in eine bestimmte Lage zu bringenden Hartmetallzähne 1 im wesentlichen prismatische Körper, die eine sich in Längsrichtung erstreckende, breite, im gewünschten ausgerichteten Zustand unten liegende Bodenfläche 2, eine hierzu parallele, schmalere Deckenfläche 3, zwei die Deckenfläche 3 mit der Bodenfläche 2 verbindende Seitenflächen 4 und 5 sowie zwei von vorne oben nach hinten unten geneigte Stirnflächen 6, 7 aufweisen, von denen die vordere 6 mit einer Rundung 8 in die Deckenfläche 3 übergeht, während die hintere 7 mit der Bodenfläche 2 die scharfe Schneidkante 9 des Hartmetallzahns bildet. Dadurch, daß die Deckenfläche 3 quer zur Längsrichtung des Hartmetallzahns 1 eine Breite besitzt, die kleiner ist, als die Breite b der Bodenfläche 2 erhält der Hartmetallzahn 1, wie man insbesondere dem Grundriß der Fig. 2 entnimmt, einen im wesentlichen trapezförmigen Querschnitt, wobei im Normalfall die beiden Seitenflächen 4 und 5 um denselben Winkel gegen die Bodenfläche 2 geneigt sind. Die Höhe der Hartmetallzähne, d.h. der vertikale Abstand zwischen der Bodenfläche 2 und der Deckenfläche 3 ist in den Figuren mit d bezeichnet.

Fig. 3 zeigt im verkleinerten Maßstab drei Hartmetallzähne, die bereits die gewünschte Orientierung besitzen und in Richtung des Pfeils F aus einer nach dem erfindungsgemäßen Verfahren arbeitenden Vorrichtung austreten.

Diese in Fig. 4 teilweise im Schnitt dargestellte Vorrichtung besitzt einen in der Draufsicht kreiszylindrischen Kessel 10 auf dessen Boden 12 die in eine bestimmte Ausrichtung zu bringenden Hartmetallzähne 1 mit beliebiger Orientierung geschüttet werden. Der Kessel 10 sitzt auf einem Sockel 13, in dessen Innerem sich ein nicht dargestellter Vibrationsmechanismus befindet, mit dessen Hilfe der gesamte Kessel 10 in Schwingungen versetzt werden kann. Durch diese Schwingungen werden die auf dem Boden 12 liegenden Hartmetallzähne 1 dazu veranlaßt, zur Innenwand 15 des Kessels hin zu wandern und sich auf einer an der Innenwand 15 angebrachten und vom Boden 12 schraubenförmig nach oben windenden Bahn 17 nach oben zum Austrittsende der Vorrichtung hin zu bewegen. Von der Bahn 17 sind in Fig. 4 vier Windungsgänge dargestellt.

Die in diesem Text verwendeten Ausdrücke "radial innen" bzw. "radial außen" beziehen sich auf den in Draufsicht kreisförmigen Querschnitt des Kessels 10.

Wie man der Fig. 4 entnimmt, ist die Oberfläche 18 der Bahn 17 nicht waagrecht, d.h. nicht senkrecht zur vertikalen Innenwand 15 des Kessels 10 angeordnet. Vielmehr ist diese Oberfläche 18 so ausgebildet, daß sie in radialer Richtung, d.h. von ihrer freien Innenkante 19 zur Innenwand 15 des Kessels 10 hin etwas abfällt. Darüberhinaus ist die radiale Tiefe t der Bahn 17 etwas kleiner als die Höhe d der Hartmetallzähne 1, von denen in Fig. 4 in schematischer Weise zwei dargestellt sind. Nimmt man an, daß sich diese beiden Hartmetallzähne mit ihrer jeweiligen Rundung 8 voraus auf der Bahn 17 nach oben, d.h. in Fig. 4 aus der Zeichenebene heraus auf den Betrachter zubewegen, dann weist beim unteren der beiden Zähne 1 die Seitenfläche 4 nach unten, während der obere der beiden Zähne mit seiner Seitenfläche 5 auf der Oberfläche 18 der Bahn 17 aufliegt.

Man entnimmt der Fig. 4 unmittelbar, daß sich der untere der beiden Zähne 1 in einem labilen Zustand befindet und aufgrund der Vibrationen des Kessels 10 das Bestreben zeigt, mit seiner Seitenfläche 5 soweit nach unten zu rutschen, daß diese mit der Oberfläche 18 in Berührung kommt. Dies ist aber nur dadurch möglich, daß sich der Hartmetallzahn 1 etwas um seine Längsachse dreht, wobei seine in der Darstellung der Fig. 4 an der Innenwand 15 des Kessels 10 satt anliegende Deckenfläche 3 von der Innenwand 15 weggekippt wird. Dadurch bewegt sich aber der Massenschwerpunkt dieses Zahns 1 über die Innenkante 19 der Bahn 17 nach innen hinaus und der Zahn 1 fällt in den Kessel zurück.

Im Gegensatz hierzu befindet sich der obere der beiden Zähne 1 in einer äußerst stabilen Lage, da die Neigung der Oberfläche 18 so an den Winkel zwischen der Seitenfläche 4 und der Bodenfläche 2 des Hartmetallzahnes 1 angepaßt ist, daß der Zahn mit seiner Bodenfläche 2 satt an der Innenwand 15 des Kessels 10 anliegt.

Ohne das dies in Fig. 4 besonders dargestellt ist, nehmen auch Zähne 1, die entweder mit ihrer Bodenfläche 2 oder ihrer Deckenfläche 3 auf der Oberfläche 18 der Bahn 17 aufliegen, eine stabile Lage ein und wandern aufgrund der Vibrationsbewegung auf der Bahn 17 nach oben.

Somit ist durch die beschriebene spezielle, sich bei diesem Beispiel praktisch über die gesamte Länge der Bahn 17 erstreckende Ausbildung der Oberfläche 18 und die Breite t der Bahn 17 eine Einrichtung zum selektiven Abwerfen von denjenigen Hartmetallzähnen 1 geschaffen, die auf einer als "ungünstig" definierten Seitenfläche liegen. Unmittelbar nach dem Einlaufen der Hartmetallzähne 1 vom Boden 12 auf die Bahn 17 hängt die Entscheidung, ob die Seitenfläche 4 oder die Seitenfläche 5 als "ungünstige" Seitenfläche definiert wird, allerdings noch davon ab, ob der betreffende Zahn 1 mit der Rundung 8 oder der scharfen Kante 9 voraus wandert. Daß sich Hartmetallzähne 1, deren Längsachse nicht mit der Längserstreckung der Bahn 17 ausgerichtet ist, nicht halten können und sofort wieder zum Boden 12 zurückfallen, versteht sich von selbst.

Von den prinzipiell möglichen acht verschiedenen Lagen, die die Hartmetallzähne 1 bezüglich ihrer Längsachse auf der Bahn 17 einnehmen können, werden durch diese erste Einrichtung zum selektiven Abwerfen von Hartmetallzähnen bereits zwei Lagen ausgeschieden.

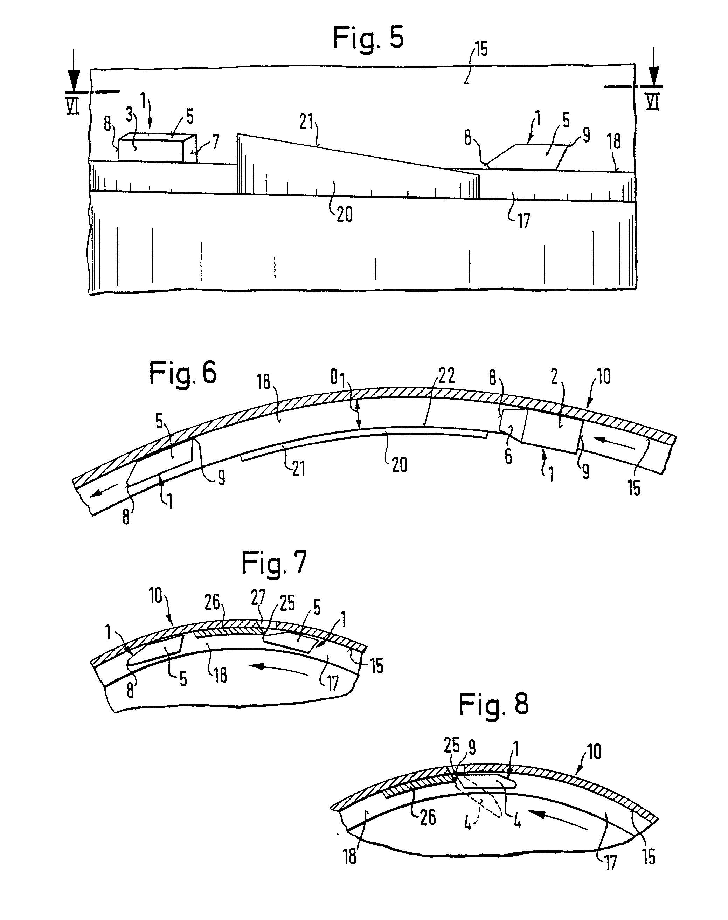

Von den verbleibenden sechs möglichen Lagen werden weitere vier durch die in den Fig. 5 und 6 dargestellte Vorrichtung zum selektiven Drehen von Hartmetallzähnen 1 um ihre Längsachse beseitigt. Die Hartmetallzähne 1 durchlaufen beim Hochwandern auf der Bahn 17 diese Einrichtung, die im einfachsten Fall aus einem an der radialen Innenseite der Bahn 17 angebrachten kurzen Blech 20 besteht, dessen obere Stirnfläche 21 in Bewegungsrichtung der Zähne 1 von einem unter der Oberfläche 18 der Bahn 17 liegenden Niveau aus rampenförmig über die Oberfläche 18 hinaus ansteigt. Der Abstand $D_1$ der radialen Außenkante 22 der oberen Rampenfläche 21 des Bleches 20 von der Innenwand 15 des Kessels 10 ist dabei so gewählt, daß er kleiner als die Breite b der Bodenfläche 3 und größer als die Höhe d der Hartmetallzähne 1 ist. Dadurch wird sichergestellt, daß auf einer der Seitenflächen 4 bzw. 5 liegende Hartmetallzähne unbeeinflußt an dem Blech 20 vorbeilaufen.

Demgegenüber werden Hartmetallzähne 1, die entweder auf der Bodenfläche 2 oder, wie der in Fig. 5 rechts dargestellte Hartmetallzahn auf der Deckenfläche 3 liegen an ihrer jeweiligen radialen Innenseite durch das Auflaufen auf die Rampenfläche 21 einseitig so weit angehoben, daß sie um ihre Längsachse zur Innenwand 15 hin um einen Winkel von ca. 90° d.h. also so weit gedreht werden, daß sie auf die entsprechende Seitenfläche 5 bzw. 4 zu liegen kommen. Dies ist den Fig. 5 und 6 ebenfalls entnehmbar, in denen links vom Blech 20 die Lage des rechts vom Blech 20 gezeigten Hartmetallzahnes 1 nach dem Durchlaufen dieser Dreh- bzw. Kippeinrichtung dargestellt ist. Der mit der Rundung 8 voraus wandernde Zahn liegt also hinter dem Blech 20 auf seiner Seitenfläche 4 und hat damit eine stabile Lage, wie sie in Fig. 4 für den oberen der beiden Hartmetallzähne wiedergegeben ist. Würde der in den Fig. 5 und 6 rechts vom Blech 20 dargestellte Hartmetallzahn nicht mit der Rundung 8 sondern mit der Schneidkante 9 voraus wandern, so würde er durch die Rampenfläche 21 auf seine Seitenfläche 5 gedreht und damit ebenfalls die in Fig. 4 für den oberen Hartmetallzahn dargestellte stabile Lage einnehmen, die es ihm ermöglicht, mit der scharfen Kante 9 voraus auf der Bahn 17 weiterzuwandern.

Andererseits können Hartmetallzähne 1, die auf der Bodenfläche 2 liegen, entweder mit der Rundung 8 oder mit der scharfen Kante 9 voraus auf das Blech 20 zuwandern. Durch die Rampenfläche 21 werden sie im ersten dieser beiden Fälle auf die Seitenfläche 5 und im zweiten Fall auf die Seitenfläche 4 gedreht. In beiden Fällen gelangen sie hierdurch in eine instabile Lage und fallen von der Bahn 17 zurück in den Kessel hinein.

Es erscheint zunächst paradox, daß durch die Vorrichtung 20, 21 auch solche Zähne ausgesondert werden, die bereits die in Fig. 3 dargestellte gewünschte Endlage besitzen. Dennoch hat sich gezeigt, daß durch dieses Vorgehen eine genügend große Anzahl von Zähnen pro Zeiteinheit in die gewünschte Lage gebracht und am Austrittsende des Kessels 10 zur Verfügung gestellt werden kann, um dort eine rasche Abnahme und Weiterverarbeitung der Zähne 1 zu gewährleisten.

Wie bereits erwähnt, können sich hinter dem Blech 20 nur solche Zähne 1 auf der Bahn 17 halten, die entweder mit ihrer Rundung voraus wandern und dabei auf der Seitenfläche 4 liegen oder mit der scharfen Kante 9 voraus wandern und dabei mit ihrer Seitenfläche 5 auf der Oberfläche 18 aufliegen.

Diese beiden Fälle sind in den Fig. 7 und 8 dargestellt, die weiterhin eine Einrichtung zum selektiven Abwerfen der sich mit der scharfen Kante 9 voraus bewegenden Hartmetallzähne 1 zeigt. Diese Einrichtung besteht aus einem von der Innenwand 15 des Kessels 10 radial nach innen vorstehenden Vorsprung 25, der in den Fig. 7 und 8 von der Hinterkante eines Blechstreifens 26 gebildet ist. Wesentlich ist, daß der Vorsprung 25 so weit in die Bewegungsbahn der Hartmetallzähne 1 hineinragt, daß diejenigen Zähne, die sich mit der scharfen Kante 9 voraus bewegen, mit dieser Kante bzw. der sich hieran anschließenden Stirnfläche 7 am Vorsprung 25 hängen bleiben. Zu diesem Zweck ist es vorteilhaft, daß die den heranwandernden Zähnen entgegengerichtete Fläche des Vorsprungs 25 mit der Innenwand 15 des Kessels 10 einen spitzen Winkel bildet. Weiterhin ist unmittelbar vor dem Vorsprung 25 in der Wand 15 des Kessels 10 eine Vertiefung bzw. Öffnung 27 vorgesehen, die es ermöglicht, daß sich die scharfe Kante 9 nach dem Hängenbleiben über die Innenwand 15 hinaus radial nach außen bewegt. Dadurch kann sich wie dies insbesondere in Fig. 8 dargestellt ist, der betreffende Zahn 9 um seine in Fig. 8 senkrecht auf der Zeichenebene stehende Achse drehen so daß er die in Fig. 8 mit gestrichelten Linien eingezeichnete Lage durchläuft und mit seinem Masseschwerpunkt so weit nach innen wandert, daß er von der Bahn 17 herunter in den Kessel 10 zurückfällt.

Demgegenüber werden Hartmetallzähne 1, die mit der Rundung 8 voraus wandern, durch den Vorsprung 25 und das Blech 26 nur geringfügig radial nach innen verschoben, ohne daß es zu einem Herunterfallen von der Oberfläche 18 kommt, wie dies in Fig. 7 gezeigt ist.

Da, wie oben bereits erläutert, auf die Einrichtung 25, 26 zum selektiven Abwerfen von Zähnen nur noch solche Hartmetallzähne 1 zuwandern, die auf einer der beiden Seitenflächen liegen und entweder mit der Rundung 8 oder der scharfen Kante 9 voraus laufen und da letztere durch diese Einrichtung von der Bahn 17 abgeworfen werden, befinden sich hinter der Einrichtung 25, 26 nur noch solche Zähne auf der Bahn 17, die mit der Rundung 8 voraus laufen und auf ihrer Seitenfläche 4 liegen, d.h. deren scharfe Kante 9 unmittelbar an der Innenwand 15 des Kessels 10 anliegt.

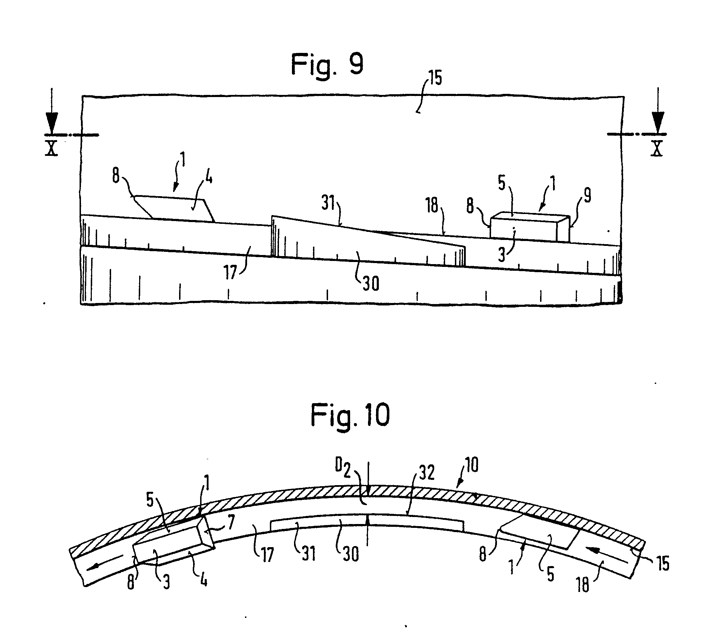

Um die gewünschte Endorientierung zu erzielen, genügt es nun, diese Zähne noch einmal um ihre Längsachse zu drehen, was durch die in den Fig. 9 und 10 dargestellte Anordnung bewerkstelligt wird. Diese Einrichtung besteht ähnlich wie die in den Fig. 5 und 6 gezeigte Einrichtung aus einem an der radialen Innenseite der Bahn 17 angebrachten Blech 30, dessen obere Stirnfläche 31 von einem Niveau, das unterhalb der Oberfläche 18 liegt, rampenartig über die Oberfläche 18 hinaus ansteigt. Der wesentlichste Unterschied zur Einrichtung 20, 21 besteht darin, daß der Abstand $D_2$, den die radiale Außenkante der Rampenfläche 31 von der Innenwand 15 des Kessels 10 besitzt, kleiner als die Höhe d der Zähne 1 ist, so daß alle auf diese Einrichtung zulaufenden Zähne um ihre Längsachse zur Innenwand 15 des Kessels 10 hin gedreht bzw. gekippt werden, so daß sie nach dem Durchlaufen dieser Einrichtung die in den Fig. 9 und 10 links vom Blech 30 dargestellte Lage einnehmen, die der in Fig. 3 wiedergegebenen gewünschten Endorientierung entspricht.

Anstelle der in den Fig. 5 und 6 bzw. 9 und 10 dargestellten Bleche mit den Rampenflächen 21 und 31 können auch andere Vorrichtungen verwendet werden, die ein entsprechendes Kippen der Hartmetallzähne 1 um ihre Längsachse bewirken. Insbesondere die Vorrichtung 30, 31 kann durch eine schraubengangförmige Ausbildung der Oberfläche 18 mit entsprechendem Drehsinn ersetzt werden.

Bei einer nach dem erfindungsgemäßen Verfahren arbeitenden Vorrichtung werden also von den grundsätzlich möglichen acht Lagen, die die zu orientieren im wesentlichen prismatischen Körper bezüglich ihrer Längsachse einnehmen können, zwei als ungünstig definierte Lagen dadurch ausgeschieden, daß die diese Lagen einnehmenden Körper von der Bewegungsbahn abgeworfen werden. Die Zahl der danach verbleibenden sechs möglichen Lagen wird dadurch eingeschränkt, daß diejenigen Körper, die vier dieser Lagen einnehmen, um ihre Längsachse auf eine Nachbarfläche gekippt werden. Dabei können zwar einige dieser Körper wieder die zuvor bereits ausgeschiedenen ungünstigen Lagen einnehmen. Diese Körper werden aber ebenfalls sofort wieder von der Bewegungsbahn abgeworfen, so daß nur noch zwei mögliche Lagen übrig bleiben, von denen keine der gewünschten Endlage entspricht. Zwischen diesen beiden möglichen Lagen wird dann eine weitere Selektion vorgenommen, so daß schließlich nur noch eine Lage übrigbleibt, die durch ein weiteres Drehen bzw. Kippen der Körper um die Längsachse in die gewünschte Endlage bzw. Endorientierung übergeführt werden kann.

**Patentansprüche**

1. Verfahren zum Orientieren von im wesentlichen prismatischen Körpern (1), insbesondere von Kreissägeblatt-Hartmetallzähnen, die eine sich in Längsrichtung erstreckende, breite, im gewünschten ausgerichteten Zustand unten liegende Bodenfläche (2), eine hierzu parallele, schmalere Deckenfläche (3), zwei die Deckenfläche (3) mit der Bodenfläche (2) verbindende Seitenflächen (4, 5) sowie zwei von vorn oben nach hinten unten geneigte Stirnflächen (6, 7) aufweisen, von denen die vordere (6) mit einer Rundung (8) in die Deckenfläche (3) übergeht, während die hintere (7) mit der Bodenfläche (2) eine scharfe Kante (9) bildet, bei dem

— die im wesentlichen prismatischen Körper (1) regellos in den Kessel (10) eines Vibrationsförderers eingebracht werden,

die Körper (1), die beim vibrationsbedingten, in Längsrichtung der Körper (1) erfolgenden Hochwandern auf einer an der Innenwand (15) des Kessels (10) angebrachten, schraubenförmig ansteigenden Bahn (17) auf der einen der beiden Seitenflächen (4, 5) liegen und deren scharfe Kante (9) dabei von der Innenwand (15) des Kessels (10) entfernt liegt, in dem Kessel (10) zurückgeworfen werden,

— hierauf die auf der Bodenfläche (2) oder der Deckenfläche (3) liegenden Körper (1) um ihre Längsachse in derselben Richtung auf eine Seitenfläche (4, 5) gekippt werden, worauf die nunmehr mit ihrer scharfen Kante (9) von der Innenwand (15) des Kessels (10) beabstandeten Körper (1) in dem Kessel (10) zurückgeworfen werden,

— weiterhin die mit der scharfen Kante (9) voraus wandernden Körper (1) in den Kessel (10) zurückgeworfen werden, und

— schließlich die verbleibenden, einheitlich ausgerichteten Körper (1) um ihre Längsachse auf die Bodenfläche (2) gekippt werden.

2. Vibrationsförderer mit einem vertikal angeordneten Kessel (10), der durch einen Vibrationsmechanismus in Schwingungen versetzt werden kann und auf seiner Innenwand (15) eine nach oben schraubenförmig angsteigende Bahn (17) aufweist, auf der auf den Boden (12) des Kessels (10) geschüttete Körper (1) aufgrund der Schwingungen des Vibrationsförderers in Richtung ihrer Längsachse nach oben zum Austrittsende des Vibrationsförderers wandern können, dadurch gekennzeichnet, daß zum Orientieren von im wesentlichen prismatischen Körpern (1), insbesondere von Kreissägeblatt-Hartmetallzähnen, die eine sich in Längsrichtung erstreckende, breite, im gewünschten ausgerichteten Zustand unten liegende Bodenfläche (2), eine hierzu parallele, schmalere Deckenfläche (3), zwei die Deckenfläche (3) mit der Bodenfläche (2) verbindende Seitenflächen(4, 5) sowie zwei von vorn oben nach hinten unten geneigte Stirnflächen (6, 7) aufweisen, von denen die vordere (6) mit einer Rundung (8) in die Deckenfläche (3) übergeht, während die hintere (7) mit der Bodenfläche (2) eine scharfe Kante (9) bildet, im Bereich der schraubenförmigen Bahn (17) in Bewegungsrichtung der Körper (1) nacheinander folgende Einrichtungen vorgesehen sind.

— eine erste Einrichtung zum selektiven Abwerfen der auf der einen Seitenfläche (4 oder 5) liegenden, mit der scharfen Kante (9) von der Innenwand (15) beabstandeten Körper (1), die dadurch gebildet ist, daß die radiale Tiefe (t) der schraubenförmig ansteigenden Bahn (17) etwas kleiner als die Höhe (d) der Körper (1) ist, und daß die Oberfläche (18) der schraubenförmig ansteigenden Bahn (17) in radialer Richtung von der freien Innenkante (19) zur Innenwand (15) des Kessels (10) hin etwas abfällt,

— eine Einrichtung zum selektiven Kippen um die Längsachse der auf der Bodenfläche (2) oder auf der Deckenfläche (3) liegenden Körper (1) auf eine Seitenfläche (4 oder 5), die von einer sich in Bewegungsrichtung der Körper (1) erstreckenden und über die Oberfläche (18) der Bahn (17) hinaus ansteigenden Rampenfläche (21) gebildet ist, die radial innerhalb der Bahn (17) angeordnet ist und deren radiale Außenkante (22) von der Innenwand (15) des Kessels (10) einen Abstand (D₁) aufweist, der größer als die Höhe (d) der Körper (1) aber kleiner als die Breite (b) der Bodenfläche (2) der Körper (1)

— eine zweite Einrichtung zum selektiven Abwerfen der auf der einen Seitenfläche (4 oder 5) liegenden und mit der scharfen Kante (9) von der Innenwand (15) beabstandeten Körper (1), die in derselben Weise wie die erste Einrichtung zum selektiven Abwerfen ausgebildet ist,

— eine Einrichtung zum selektiven Abwerfen der sich mit der scharfen Kante (9) voraus bewegenden Körper (1), die von einem im Bereich der Bahn (17) von der Innenwand (15) des Kessels (10) nach innen vorstehenden Vorsprung (25) gebildet ist, dessen radiale Abmessung kleiner als die halbe Höhe (d) der Körper (1) ist, und

— eine Einrichtung zum Kippen der verbleibenden Körper (1) auf ihre Bodenfläche (2), die von einer zweiten, sich in Bewegungsrichtung der Körper (1) erstreckenden und über die Oberfläche (18) der Bahn (17) hinaus ansteigenden Rampenfläche (31) gebildet ist, die an der radialen Innenseite der Bahn (17) angeordnet ist und deren radiale Außenkante (32) von der Innenwand (15) des Kessels (10) einen Abstand (D₂) aufweist, der kleiner als die Höhe (h) der Körper (1) ist.

3. Vibrationsförderer nach Anspruch 2, dadurch gekennzeichnet, daß der Winkel, den die zur Innenwand (15) des Kessels (10) hin abfallende Oberfläche (18) der schraubenförmig ansteigenden Bahn (17) in radialer Richtung mit der Horizontalen einschließt, um 90° kleiner als der Winkel ist, den jede der Seitenflächen (4, 5) eines Körpers (1) mit der Deckenfläche (3) einschließt.

4. Vorrichtung nach Anspruch 2 oder 3, dadurch gekennzeichnet, daß sich die zum selektiven Abwerfen der auf einer Seitenfläche (4 oder 5) liegenden und dabei mit der scharfen Kante (9) von der Innenwand (15) des Kessels (10) beabstandeten Körper (1) führende Ausbildung der schraubenförmig ansteigenden Bahn (17) sich nahezu über deren gesamte Länge erstreckt.

5. Vorrichtung nach einem der Ansprüche 2 bis 4, dadurch gekennzeichnet, daß die den sich heranbewegenden Körpern (1) zugewandte Fläche des Vorsprungs (25) mit der Innenwand (15) des Kessels (10) einen Winkel kleiner 90° einschließt.

6. Vorrichtung nach einem der Ansprüche 2 bis 5, dadurch gekennzeichnet, daß der Vorsprung (25) von dem in Bewegungsrichtung der Körper (1) gesehen vorderen Ende eines an der Innenwand (15) des Kessels (10) flach anliegenden Blechstreifens (26) gebildet ist.

7. Vorrichtung nach einem der Ansprüche 2 bis 6, dadurch gekennzeichnet, daß die Innenwand (15) des Kessels (10) unmittelbar vor dem Vorsprung (25) eine das Eintreten der scharfen Kante (9) ermöglichende Vertiefung (27) aufweist.

8. Vorrichtung nach einem der Ansprüche 2 bis 7, dadurch gekennzeichnet, daß die Oberfläche (18) der Bahn (17) im Bereich des Vorsprungs (25) in radialer Richtung zur Innenwand (15) des Kessels (10) hin abfällt.

**Revendications**

1. Procédé destiné à orienter des corps essentiellement prismatiques (1), en particulier des dents en métal dur de lames de scie circulaire, présentant une face inférieure (2) large, disposée dans le sens de la longueur et située dans le bas selon l'orientation souhaitée, une face supérieure (3) moins large, parallèle à la précédente, deux faces latérales (4, 5) reliant la face supérieure (3) à la face inférieure (2), ainsi que deux faces frontales (6, 7) inclinées de l'avant haut vers l'arrière bas, dont la plus en avant (6) passe à la face supérieure (3) en décrivant un arrondi (8), tandis que celle en arrière (7) forme une arête vive (9) avec la face inférieure (2), selon lequel

— les corps essentiellement prismatiques (1) sont introduits de façon aléatoire dans la bassine (10) d'un transporteur à vibrations,

— les corps (1) qui, lors de l'ascension résultant des vibrations et se déroulant dans le sens de la longueur des corps (1), reposent par l'une de leurs faces latérales (4, 5) sur une piste montante hélicoïdale (17) mise en place sur la paroi intérieure (15) de la bassine (10), et dont l'arête vive (9) est en cela éloignée de la paroi intérieure (15) de la bassine (10), sont rejetés à l'intérieur de la bassine (10),

— après quoi les corps (1) reposant sur la face inférieure (2) ou la face supérieure (3) sont basculés selon leur axe longitudinal, dans le même sens, sur une face latérale (4, 5), suite à quoi les corps (1) désormais séparés de la paroi intérieure (15) de la bassine (10) par leur arête vive (9) sont rejetés à l'intérieur de la bassine (10),

— en outre, les corps (1) se déplaçant avec leur arête vive (9) vers l'avant sont rejetés à l'intérieur de la bassine (10) et

— enfin, les corps (1) restants, orientés de façon identique, sont basculés sur leur face inférieure (2) selon leur axe longitudinal.

7

2. Transporteur à vibrations comprenant une bassine (10) disposée verticalement, pouvant être mis en vibrations par un mécanisme générateur de vibrations, et présentant sur la paroi intérieure (15) une piste (17) montante hélicoïdale, sur laquelle les corps (1) versés au fond (12) de la bassine (10) peuvent se déplacer dans le sens de leur axe longitudinal vers le haut, en direction de la sortie du transporteur à vibrations, en raison des vibrations qu'émet le transporteur à vibrations, caractérisé en ce que pour - orienter des corps (1) essentiellement prismatiques, en particulier des dents en métal dur de lames de scie circulaire qui présentent une face inférieure (2) large, s'étendant dans le sens de la longueur et situé au bas, selon l'orientation souhaitée, une face supérieure (3) moins large, parallèle à la précédente, deux faces latérales (4, 5) reliant la face supérieure (3) à la face inférieure (2), ainsi que deux faces frontales (6, 7) inclinées de l'avant haut vers l'arrière bas, dont la plus en avant (6) passe à la face supérieure (3) en décrivant un arrondi (8), tandis que celle à l'arrière (7) forme une arête vive (9) avec la face inférieure (2) les dispositifs suivants sont prévus à proximité de la piste hélicoïdale (17) l'un aprés l'autre dans le sens du déplacement des corps (1),

— un premier dispositif destiné au rejet sélectif des corps (1) reposant sur l'une des faces latérales (4 ou 5), séparés de la paroi intérieure (15) par leur arête vive (9), consistant en ce que la profondeur radiale (t) de la piste (17) hélicoïdale montante est légèrement inférieure à la hauteur (d) des corps (1) et que la surface (18) de la piste (17) montante hélicoïdale est légèrement abaissée en sens radial de l'arête intérieure (19) libre à la paroi intérieure (15) de la bassine (10),

— un dispositif destiné à faire basculer de façon sélective dans le sens de leur axe longitudinal les corps (1) reposant sur la face inférieure (2) ou sur la face supérieure (3), vers une face latérale (4 ou 5) consistant en une surface en forme de rampe (21) s'étendant dans le sens du déplacement des corps (1) et dépassant par le haut la surface (18) de la piste (17) disposée de façon radiale à l'intérieur de la piste (17), et dont l'arête radiale extérieure (22) présente par rapport à la paroi intérieure (15) de la bassine (10) un espace ($D_1$) supérieur à la hauteur (d) des corps (1), mais inférieur à la largeur (b) de la face inférieure (2) des corps (1),

— un second dispositif destiné au rejet sélectif des corps (1) reposant sur l'une des faces latérales (4 ou 5) et séparés de la paroi intérieure (15) par l'arête vive (9), fait de la même manière que le premier dispositif destiné au rejet sélectif,

— un dispositif destiné au rejet sélectif des corps (1) qui se déplacent arête vive (9) vers l'avant, consistant en une avancée (25) partant de la paroi intérieure (15) de la bassine (10), vers l'intérieur, à proximité de la piste (17), avancée dont la dimension radiale est inférieure à la demi-hauteur (d) des corps (1) et

— un dispositif destiné à faire basculer les corps (1) restants vers leur face inférieure (2), formé par une seconde surface en forme de rampe (31) s'étendant dans le sens du déplacement des corps (1) et dépassant par le haut la surface (18) de la piste (17), surface en forme de rampe adjointe à la partie radiale intérieurs de la piste (17), et dont l'arête radiale extérieurs (32) présente, par rapport à la paroi intérieure (15) de la bassine (10), un espace ($D_2$) inférieur à la hauteur (h) des corps (1).

3. Transporteur à vibrations selon la revendication 2, caractérisé en ce que l'angle compris entre la surface (18) de la piste (17) montante hélicoïdale abaissée vers la paroi intérieure (15) de la bassine (10) et un plan horizontal est, dans le sens radial, inférieur de 90° à l'angle que forme chacune des faces latérales (4, 5) d'un corps (1) avec la face supérieure (3).

4. Dispositif selon l'une des revendications 2 ou 3, caractérisé en ce que la formation de la piste (17) montante hélicoïdale entraînant le rejet sélectif des corps (1) reposant sur une face latérale (4 ou 5) et étant ainsi séparés de la paroi intérieure (15) de la bassine (10) par l'arête vive (9) s'étend quasiment sur toute la longueur de celle-ci.

5. Dispositif selon l'une quelconque des revendications 2 à 4, caractérisé en ce que la face de l'avancée (25) orientée vers les corps (1) approchant forme avec la paroi intérieure (15) de la bassine (10) un angle inférieur à 90°.

6. Dispositif selon l'une quelconque des revendications 2 à 5, caractérisé en ce que l'avancée (25) est formée par le bout d'une bande de tôle (26) disposée de facon plate sur la paroi intérieure (15) de la bassine (10), le bout étant situé en avant dans le sens du déplacement des corps (1).

7. Dispositif selon l'une quelconque des revendications 2 à 6, caractérisé en ce que la paroi intérieure (15) de la bassine (10) présente directement devant l'avancée (25) un évidement (27) permettant l'entrée de l'arête vive (9).

8. Dispositif selon l'une quelconque des revendications 2 à 7, caractérisé en ce que la surface (18) de la piste (17) est abaissée en sens radial vers la paroi intérieure (15) de la bassine (10) à proximité de l'avancée (25).

**Claims**

1. Method for the orientation of substantially prismatic bodies (1), particularly of hard metal teeth of circular saw blades, which display a wide bottom surface (2) extending in longitudinal direction and lying below in the desired aligned state, a narrower top surface (3) parallel thereto, two side surfaces (4, 5) connecting the top surface (3) with the bottom surface (2) as well as two end surfaces (6, 7), which are inclined from the front above to the rear below and of which the front one (6) passes over with a rounding (8) into the top surface (3) while the rear one (7) forms a sharp edge (9) with the bottom surface (2), in which

— the substantially prismatic bodies (1) are randomly introduced into the basin (10) of a vibratory conveyor,

— the bodies (1), which during the wandering-up that is due to vibration and takes place in longitudinal direction of the bodies (1) on a helically rising track (17) mounted to the inside wall (15) of the basin (10) lie on one of both the side surfaces (4, 5) and the sharp edge (9) of which in that case lies remote from the inside wall (15) of the basin (10), are thrown back into the basin (10),

— the bodies (1) lying on the bottom surface (2) or the top surface (3) are hereupon turned about their longitudinal axis in the same direction onto a side surface (4, 5), whereupon the bodies (1) now spaced by their sharp edge (9) from the inside wall (15) of the basin (10), are thrown back into the basin (10),

— furthermore the bodies (1) wandering with the sharp edge (9) forward are thrown back into the basin (10) and

— finally the remaining, uniformly aligned bodies (1) are tipped about their longitudinal axis onto the bottom surface (2).

2. Vibratory conveyor with a vertically arranged basin (10), which can be set into oscillations by a vibratory mechanism and on its inside wall (15) displays an upwardly rising helical track (17), on which bodies (1), which have been poured on the base (12) of the basin (10), can by reason of the oscillations of the vibratory conveyor wander in direction of their longitudinal axis upwardly to the exit end of the vibratory conveyor, characterised thereby, that for the orientation of substantially prismatic bodies (1), particularly of hard metal teeth of circular saw blades, which display a wide bottom surface (2) extending in longitudinal direction and lying below in the desired aligned state, a narrower top surface (3) parallel thereto, two side surfaces (4, 5) connecting the top surface (3) with the bottom surface (2) as well as two end surfaces (6, 7), which are inclined from the front above to the rear below and of which the front one (6) passes over with a rounding (8) into the top surface (3) while the rear one (7) forms a sharp edge (9) with the bottom surface (2), the following equipments are provided, one after the other in direction of movement of the bodies (1), in the region of the helical track (17):

— a first equipment for the selective throwing-off of the bodies (1) lying on the one side surface (4 or 5) and spaced by the sharp edge (9) from the inside wall (15), which first equipment is formed thereby, that the radial depth (t) of the helically rising track (17) is somewhat smaller than the height (d) of the bodies (1) and that the surface (18) of the helically rising track (17) falls away somewhat in radial direction from the free inside edge (19) towards the inside wall (15) of the basin (10),

— an equipment for the selective tipping of the bodies (1), which lie on the bottom surface (2) or on the top surface (3), about the longitudinal axis onto one side surface (4 or 5), which equipment is formed by a ramp surface (21), which is arranged radially within the track (17), extends in direction of movement of the bodies (1), rises beyond the surface (18) of the track (17) and the radially outer edge (22) of which displays a spacing ($D_1$) from the inside wall (15) of the basin (10), which is greater than the height (d) of the bodies (1), but smaller than the width (b) of the base surface (2) of the bodies (1),

— a second equipment for the selective throwing-off of the bodies (1) lying on the one side surface (4 or 5) and spaced by the sharp edge (9) from the inside wall (15), which is constructed in the same manner as the first equipment for the selective throwing-off,

— an equipment for the selective throwing-off of the bodies (1) moving with the sharp edge (9) forward and formed by a projection (25), which protrudes inwardly from the inside wall (15) of the basin (10) in the region of the track (17) and the radial dimension of which is smaller than half the height (d) of the bodies (1), and

— an equipment for the tipping of the remaining bodies (1) onto their bottom surface (2) and formed by a second ramp surface (31), which is arranged at the radially inward side of the track (17), extends in direction of movement of the bodies (1), rises beyond the surface (18) of the track (17) and the radially outer edge (32) of which displays a spacing ($D_2$) from the inside wall (15) of the basin (10), which is smaller than the height (h) of the bodies (1).

3. Vibratory conveyor according to claim 2, characterised thereby, that the angle, which the surface (18), which falls away towards the inside wall (15) of the basin (10), of the helically rising track (17) includes with the horizontal in radial direction is smaller by 90° than the angle which each of the side surfaces (4, 5) of a body (1) includes with the top surface (3).

4 Arrangement according to claim 2 or 3, characterised thereby, that the formation, which leads to the selective throwing-off of the bodies (1) lying on one side surface (4 or 5) and in that case spaced by the sharp edge (9) from the inside wall (15) of the basin (10), of the helically rising track (17) extends over nearly its entire length.

5. Arrangement according to one of the claims 2 to 4, characterised thereby, that the surface, facing the bodies (1) moving towards it, of the projection (25) includes an angle smaller than 90° with the inside wall (15) of the basin (10).

6. Arrangement according to one of the claims 2 to 5, characterised thereby, that the projection (25) is formed by that end of a sheet metal strip (26) lying against the inside wall (15) of the basin (10), which is forward seen in direction of movement of the bodies (1).

7. Arrangement according to one of the claims 2 to 6, characterised thereby, that the inside wall (15) of the basin (10) immediately in front of the projection (25) displays a depression (27) making possible the entry of the sharp edge (9).

8. Arrangement according to one of the claims 2 to 7, characterised thereby, that the surface (18) of the track (17) in the region of the projection (25) falls away in radial direction towards the inside wall (15) of the basin (10).

Fig. 2a

Fig. 2b

Fig. 1

Fig. 3

Fig. 2c

Fig. 4

Fig. 5

Fig. 6

Fig. 7

Fig. 8

## Fig. 9

## Fig. 10